(19) Europäisches Patentamt
European Patent Office
Office européen des brevets

(11) **EP 3 083 319 B1**

(12) **EUROPÄISCHE PATENTSCHRIFT**

(45) Veröffentlichungstag und Bekanntmachung des Hinweises auf die Patenterteilung:
**09.06.2021 Patentblatt 2021/23**

(51) Int Cl.:
*H02P 25/024* (2016.01)    *H02P 29/024* (2016.01)
*H02P 23/14* (2006.01)    *H02P 27/08* (2006.01)
*H02P 3/18* (2006.01)

(21) Anmeldenummer: **14799738.1**

(22) Anmeldetag: **14.11.2014**

(86) Internationale Anmeldenummer:
**PCT/EP2014/074594**

(87) Internationale Veröffentlichungsnummer:
**WO 2015/090756 (25.06.2015 Gazette 2015/25)**

(54) **VORRICHTUNG UND VERFAHREN ZUM BETREIBEN EINER ELEKTRISCHEN MASCHINE**

APPARATUS AND METHOD FOR OPERATING AN ELECTRIC MACHINE

APPAREIL ET PROCEDE POUR FAIRE FONCTIONNER UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2013 DE 102013226577**

(43) Veröffentlichungstag der Anmeldung:
**26.10.2016 Patentblatt 2016/43**

(73) Patentinhaber: **Robert Bosch GmbH**
**70442 Stuttgart (DE)**

(72) Erfinder:
• **XIE, Lingling**
**71634 Ludwigsburg-Eglosheim (DE)**
• **KOENIG, Andreas**
**73666 Baltmannsweiler (DE)**

(56) Entgegenhaltungen:
**DE-A1-102007 020 509    DE-A1-102011 079 566**
**DE-A1-102012 002 023    JP-A- 2003 259 679**
**US-B1- 7 279 862**

EP 3 083 319 B1

**Beschreibung**

Die vorliegende Erfindung betrifft eine Vorrichtung und ein Verfahren zum Betreiben einer elektrischen Maschine. Insbesondere betrifft die vorliegende Erfindung eine Vorrichtung und ein Verfahren zum Betreiben einer elektrischen Maschine für den Wechsel von einem Regelbetrieb zu einem Freilaufbetrieb.

Stand der Technik

Elektrische Maschinen, wie beispielsweise permanent erregte Synchronmaschinen, finden in zahlreichen technischen Bereichen Einsatz. Beispielsweise werden solche permanent erregten Synchronmaschinen in Kraftfahrzeugen eingesetzt. Aus Sicherheitsgründen müssen dabei Vorkehrungen für einen Betriebszustand bei einem Fehlerfall getroffen werden. Eine Möglichkeit einen solchen Betriebszustand einzustellen ist dabei der sogenannte Freilauf. Dabei werden alle Anschlüsse der elektrischen Maschine voneinander getrennt und es erfolgt keine aktive Ansteuerung der elektrischen Maschine mit einer Spannung. Ein weiterer sicherer Betriebszustand ist der sogenannte aktive Kurzschluss. Dabei werden mittels geeigneter Schaltelemente die Anschlüsse der elektrischen Maschine kurzgeschlossen.

Die Deutsche Patentanmeldung DE 10 2012 101 508 A1 offenbart eine Vorrichtung und ein Verfahren zum Kurzschließen einer permanent erregten Synchronmaschine, wobei die Maschine durch Stromrichterventile kurzgeschlossen wird. Weicht eine Spannung in einem Zwischenkreis der Ansteuerschaltung die elektrische Maschine dabei von einem Grenzwert ab, so werden die Stromrichterventile wieder geöffnet und die Maschine anschließend im Freilauf betrieben.

DE 10 2012 002 023 A1 betrifft ein Verfahren und eine Vorrichtung zum Betreiben einer Wechselrichterschaltung einer Elektromaschine. Ist die Drehzahl der Elektromaschine oberhalb eines Grenzwertes, so wird die Elektromaschine im Kurzschlussmodus betrieben. Ist die Drehzahl unterhalb des Grenzwertes, wird die Elektromaschine im Freilaufmodus betrieben.

US 7 279 862 B1 betrifft die Fehlerbehandlung eines wechselrichtergesteuerten Elektromotors. Wenn die Geschwindigkeit des Motors größer ist als eine vorgegebene Geschwindigkeit, wird der Motor im Freilauf betrieben. Ist die Geschwindigkeit des Motors kleiner als eine vorgegebene Geschwindigkeit, wird der Motor im Kurzschlussmodus betrieben.

Es besteht daher ein Bedarf nach einer Vorrichtung und einem Verfahren zum Betreiben einer elektrischen Maschine, das einen verbesserten Wechsel vom Regelbetrieb in den Freilauf ermöglicht.

Offenbarung der Erfindung

Die vorliegende Erfindung schafft hierzu eine Vorrichtung und eine Verfahren zum Betreiben einer elektrischen Maschine mit den Merkmalen der unabhängigen Patentansprüche.

Vorteile der Erfindung

Der vorliegenden Erfindung liegt die Idee zugrunde, bei der Anforderung eines Wechsels vom Regelbetrieb zum Freilaufbetrieb einer elektrischen Maschine diesen Wechsel nicht schlagartig auszuführen, sondern zunächst die Spannung an den Anschlüssen der elektrischen Maschine geregelt auf die zu erwartenden Spannungswerte während des Freilaufbetriebs anzupassen. Erst nachdem an den Anschlüssen der elektrischen Maschine die Spannungsverhältnisse eingestellt worden sind, die den Spannungsverhältnissen des Freilaufbetriebs entsprechen, wird daraufhin tatsächlich in den Freilaufbetrieb gewechselt. Auf diese Weise können Spannungssprünge vermieden, oder zumindest reduziert werden. Beim Umschalten vom Regelbetrieb in den Freilaufbetrieb entstehen somit keine für das Gesamtsystem schädlichen Spannungssprünge, die zu Überspannungen und damit zu Beschädigungen des Systems führen können. Insbesondere können durch das sanfte Wechseln vom Regelbetrieb in den Freilaufbetrieb und der sich daran anschließenden Freilaufphase unkontrollierbare Spannungserhöhungen in einem Zwischenkreis verhindert werden. Dies führt auch zu einer geringeren Belastung der Energieversorgung, wie zum Beispiel der Traktionsbatterie eines Elektro- oder Hybridfahrzeugs. Somit können diese relativ teuren und sensiblen Batterien geschont werden und damit wird die Lebensdauer der Batterien erhöht.

Wird an der elektrischen Maschine die Freilaufspannung zunächst aktiv durch Regeln des Wechselrichters eingestellt, so kann daraufhin in den Freilaufbetrieb gewechselt werden, ohne dass es zu Spannungssprüngen kommt.. Die Freilaufspannung der elektrischen Maschine ist in der Regel eine von der Drehzahl abhängige Funktion. Durch Anpassen der einzustellenden Spannung beim Übergang vom Regelbetrieb in den Freilaufbetrieb in Abhängigkeit von der Drehzahl kann somit eine sehr gute Anpassung der einzustellenden Spannung erreicht werden.

Gemäß einem Ausführungsbeispiel umfasst die Vorrichtung einen Drehzahlsensor, der dazu ausgelegt ist, die Drehzahl der elektrischen Maschine zu bestimmen. Durch die Bestimmung der Drehzahl der elektrischen Maschine mittels eines Drehzahlsensors kann eine sehr genaue Bestimmung der Drehzahl und somit eine präzise Anpassung der einzustellenden Freilaufspannung erreicht werden. Alternativ ist es auch möglich, die Drehzahl aus anderen Quellen zu beziehen, beispielsweise die zuvor im Regelbetrieb eingestellte Solldrehzahl zu verwenden, oder die Drehzahl basierend auf einem Modell abzuschätzen.

Gemäß einem Ausführungsbeispiel umfasst der Wechselrichter eine Mehrzahl von Halbleiterschaltern, wobei im Freilaufbetrieb die Halbleiterschalter geöffnet sind. Halbleiterschalter eignen sich besonders gut zur Ansteuerung elektrischer Maschinen. Diese Halbleiterschalter schalten verschleißfrei und sehr schnell. Darüber hinaus sind sie heutzutage sehr kostengünstig erhältlich.

Ein weiteres Ausführungsbeispiel umfasst eine elektrische Antriebsvorrichtung mit einer elektrische Maschine und einer erfindungsgemäßen Vorrichtung zum Betreiben der elektrischen Maschine.

Gemäß einem weiteren Ausführungsbeispiel umfasst die elektrische Maschine eine permanent erregte Synchronmaschine.

Gemäß einem weiteren Ausführungsbeispiel schafft die vorliegende Erfindung ein Kraftfahrzeug mit einer erfindungsgemäßen elektrischen Antriebsvorrichtung.

Weitere Vorteile und Ausführungsbeispiele ergeben sich aus der nachfolgenden Beschreibung unter Bezug auf die beigefügten Figuren.

Kurze Beschreibung der Figuren

Dabei zeigen:

Figur 1: eine schematische Darstellung für die Ansteuerung einer elektrischen Maschine im Freilauf;

Figur 2: eine schematische Darstellung eines elektrischen Antriebssystems gemäß einem Ausführungsbeispiel der vorliegenden Erfindung; und

Figur 3: eine schematische Darstellung eines Ablaufdiagramms für ein Verfahren, wie es einem weiteren Ausführungsbeispiel zugrunde liegt.

Beschreibung von Ausführungsbeispielen

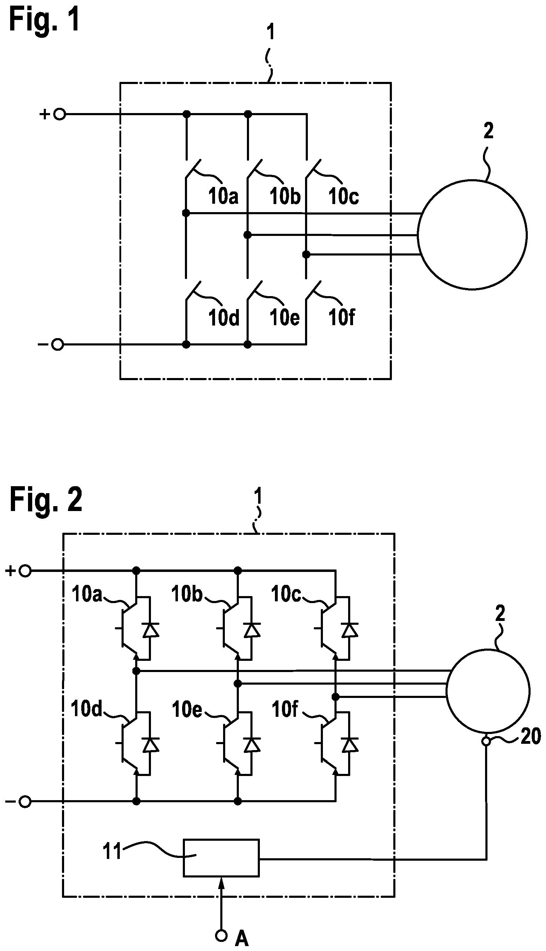

Figur 1 zeigt eine schematische Darstellung für die Ansteuerung einer elektrischen Maschine 2 durch einen Wechselrichter 1 im Freilauf. Bei der elektrischen Maschine 2 kann es sich beispielsweise um eine Synchronmaschine, vorzugsweise um eine permanent erregte Synchronmaschine handeln. Alternativ sind auch andere elektrische Maschinen, wie beispielsweise eine Asynchronmaschine oder ähnliches möglich. In dem hier dargestellten Ausführungsbeispiel, wie auch in der weiteren nachfolgenden Beschreibung wird die vorliegende Erfindung unter Bezug auf eine dreiphasige elektrische Maschine beschrieben. Darüber hinaus sind auch elektrische Maschinen mit einer hiervon abweichenden Phasenanzahl ebenso möglich.

Der Wechselrichter 1 wird von einer Gleichspannungsquelle (hier nicht dargestellt) gespeist. Dabei kann es sich bei der Gleichspannungsquelle beispielsweise um eine Batterie, wie zum Beispiel die Traktionsbatterie eines Hybrid- oder Elektrofahrzeuges handeln. Weitere Gleichspannungsquellen oder auch ein AC-DC-Konverter zur Speisung des Wechselrichters sind darüber hinaus ebenso möglich. Der Wechselrichter 1 weist dabei eine Mehrzahl von Schaltelementen 10a-10f auf. Bei diesen Schaltelementen kann es sich vorzugsweise um Halbleiterschaltelemente, wie zum Beispiel IGBT oder MOSFET handeln. Solche Halbleiterschaltelemente sind in der Lage verschleißfrei eine große Anzahl von Schaltzyklen bei sehr schneller Schaltfrequenz auszuführen. Vorzugsweise ist zu jedem dieser Schaltelemente 10a-10f darüber hinaus parallel eine Freilaufdiode angeordnet.

Im Freilaufbetrieb sind dabei alle Schaltelemente 10a-10f des Wechselrichters geöffnet. Die Anschlüsse der elektrischen Maschine 2 sind somit alle voneinander elektrisch getrennt. Lediglich durch die den Halbleiterschaltelementen parallel geschalteten Freilaufdioden ist in diesem Freilaufbetrieb ein Stromfluss möglich.

Im Regelbetrieb dagegen werden die Schaltelemente 10a-10f gezielt angesteuert, um dabei durch geeignete Modulation an den Anschlüssen der elektrischen Maschine 2 jeweils ein Spannungssignal bereitzustellen. Je nach Modulation bzw. Amplitude der so an den Anschlüssen der elektrischen Maschine 2 bereitgestellten Spannung kann somit in dem Regelbetrieb ein gewünschtes Drehmoment bzw. eine gewünschte Drehzahl eingestellt werden.

Kommt es bei der elektrischen Antriebsvorrichtung zu einer Störung, so kann es dabei erforderlich werden, dass die elektrische Maschine 2 nicht länger im Regelbetrieb betrieben werden darf, sondern in den Freilaufbetrieb wechseln muss. Bei einem abrupten Wechsel vom Regelbetrieb in den Freilaufbetrieb, bei dem plötzlich unmittelbar alle Schaltelemente 10a-10f geöffnet werden, kann es dabei zu unerwünschten Spannungsüberhöhungen kommen. Diese Spannungsüberhöhungen müssen bei der Dimensionierung des Wechselrichters 1 und der elektrischen Maschine 2 berücksichtigt werden. Darüber hinaus besteht die Gefahr, dass solche Spannungsüberhöhungen die Komponenten in der elektrischen Antriebsvorrichtung beschädigen oder zumindest die Lebensdauer negativ beeinflussen.

Figur 2 zeigt eine schematische Darstellung einer elektrischen Antriebsvorrichtung gemäß einem Ausführungsbeispiel der vorliegenden Erfindung. Die elektrische Antriebsvorrichtung umfasst einen Wechselrichter 1 und eine elektrische Maschine 2 analog zu der Darstellung in Figur 1. Im Fehlerfall kann durch eine Signalisierung an dem Anschluss A der Regelbetrieb beendet und in einen Freilaufbetrieb gewechselt werden. Dabei wird durch einen Regler 11 nach Signalisierung eines Wechsels vom Regelbetrieb in den Freilaufbetrieb jedoch nicht schlagartig der Regelbetrieb beendet und daraufhin die Schaltelemente 10a-10f des Wechselrichters geöffnet, sondern es erfolgt zunächst eine kontinuierliche Anpassung der durch den Wechselrichter bereitgestellten Spannungsverhältnisse, bis die Spannungsverhältnisse an den Anschlüssen der elektrischen Maschine 2 der zu erwartenden Freilaufspannung entsprechen.

Hierzu wird durch den Regler 11 zunächst die Drehzahl der elektrischen Maschine 2 bestimmt. Beispielsweise kann die elektrische Maschine 2 hierzu über einen Drehzahlgeber 20 verfügen, der die aktuelle Drehzahl der elektrischen Maschine 2 erfasst und dem Regler 11 bereitstellt. Darüber hinaus ist es auch möglich, einen Sollwert für die aktuelle Drehzahl zum Zeitpunkt der Anforderung für den Wechsel vom Regelbetrieb in den Freilaufbetrieb als Ausgangsgröße für die Bestimmung der Freilaufspannung zu verwenden. Alternative Verfahren zur Bestimmung der Drehzahl, beispielsweise ein Modellierung des gesamten Antriebssystems und eine darauf basierende Berechnung der Drehzahl der elektrischen Maschine 2 ist ebenso möglich.

Daraufhin ermittelt der Regler 11 basierend auf der Drehzahl der elektrischen Maschine 2 die zu dieser Drehzahl korrespondierende Freilaufspannung der elektrischen Maschine 2. Diese Freilaufspannung wird in der Regel geringer sein, als die zum Zeitpunkt der Anforderung eingestellte Spannung während des Regelbetriebs.

Der Regler 11 wird daraufhin sukzessive die durch den Wechselrichter 1 an den Anschlüssen der elektrischen Maschine 2 bereitgestellte Spannung von der aktuellen Spannung auf den ermittelten Wert der Freilaufspannung anpassen. Diese Anpassung kann beispielsweise innerhalb einer vorbestimmten Zeitdauer $\Delta t$ erfolgen. Beispielsweise haben sich für die Anpassung der Spannungsverhältnisse von der Regelspannung zu der Freilaufspannung Zeitintervalle von einigen Millisekunden, beispielsweise 5 Millisekunden bis 20 Millisekunden als geeignet erwiesen. Andere Zeitintervalle sind jedoch ebenso möglich.

Alternativ ist es auch möglich, durch den Regler 11 die Spannung an den Anschlüssen der elektrischen Maschine 2 mit einer vorgegebenen Spannungssteilheit zu variieren. Beispielsweise kann dabei die Amplitude der an den Anschlüssen der elektrischen Maschine 2 einzustellenden Wechselspannung mit einer vorgegebenen Spannungsdifferenz pro Zeiteinheit abgesenkt (oder gegebenenfalls auch erhöht) werden. Somit kann gewährleistet werden, dass es zu keiner übermäßigen Spannungsveränderungen während des Anpassungsvorgangs kommt.

Der Regler 11 kann dabei mögliche vorhandene Sensorwerte, wie Drehzahl oder gegebenenfalls auch Spannungs- bzw. Stromverhältnisse etc. mit in den Regelvorgang einbeziehen, um die einzustellende Spannung an der elektrischen Maschine 2 möglichst präzise auf die aktuelle Freilaufspannung einzustellen.

Die einzustellende Freilaufspannung als Funktion der Drehzahl kann dabei beispielsweise in einem Speicher innerhalb oder außerhalb des Reglers 11 abgelegt werden. Beispielsweise können hierzu zur Vorgabe der einzustellenden Freilaufspannungen in Abhängigkeit von der Drehzahl die erforderlichen Spannungswerte in einer Tabelle bereitgestellt werden. Um dabei die Anzahl der erforderlichen Spannungswerte, die hierzu abgespeichert werden müssen, minimal zu halten, kann für Drehzahlen zwischen zwei abgespeicherten Stützstellen darüber hinaus die Freilaufspannung auch interpoliert werden. Alternative Möglichkeiten zur Bestimmung der drehzahlabhängigen Freilaufspannungen sind darüber hinaus ebenso möglich. Beispielsweise kann die Freilaufspannung auch als ein Modell innerhalb des Reglers 11 abgelegt werden, so dass die Freilaufspannung als mathematische Funktion in Abhängigkeit von der Drehzahl ermittelt werden kann. Aber auch eine externe Vorgabe von Freilaufspannungen durch eine weitere Schnittstelle am Regler 11 ist ebenso möglich.

Der Regler 11 kann dabei die einzustellende Freilaufspannung auch als Stellgrößen für die d- bzw. q-Komponenten der Stellgrößen bereitgestellt werden. der Zusammenhang zwischen d- und q-Komponenten und den Phasenspannungen an den Anschlüssen der elektrischen Maschine 2 ist dabei bereits bekannt. Zur Einstellung der erforderlichen Freilaufspannung wird dabei die d-Komponente der Spannung auf Null geregelt. Bei einer vorgegebenen Übergangszeit $\Delta t$ ergibt sich dabei für die d-Komponente der Spannung $U_d(t)$:

$$U_d(t) = \frac{U_{d,init}}{\Delta t}(t - \Delta t)$$

Dabei ist $U_{d,init}$ die Regelspannung zu Beginn des Übergangs für die d-Komponente.

Die q-Komponente der Stellgröße wird dabei wie folgt eingeregelt:

$$U_q(t) = \frac{U_q(n) - U_{q,init}}{\Delta t}(t - \Delta t) + U_q(n)$$

Dabei ist $U_{q,init}$ die Stellgröße der q-Komponente der Spannung zu Beginn des Übergangs vom Regel- in den Freilaufbetrieb und $U_q(n)$ die Leerlaufspannung der elektrischen Maschine in Abhängigkeit von der Drehzahl n.

Somit wird die d-Spannungskomponente am Ende des Regelvorgangs zu Null geregelt, während die q-Spannungskomponente auf die Leerlaufspannung der elektrischen Maschine für die jeweilige Drehzahl eingestellt wird.

Diese Ausregelung der Spannungskomponenten kann somit unabhängig von den aktuellen Phasenstromwerten erfolgen. Daher ist bei einer solchen Anpassung der Spannungswerte an den Anschlüssen der elektrischen Maschine 2 kein Stromsensor zur Ermittlung der Phasenströme erforderlich. Die erfindungsgemäße Anpassung der Spannungen an den Anschlüssen der elektrischen Maschine kann daher auch dann erfolgen, wenn der Freilaufbetrieb beispielsweise aufgrund eines Fehlers in den Sensoren für die Phasenströme auftreten würde.

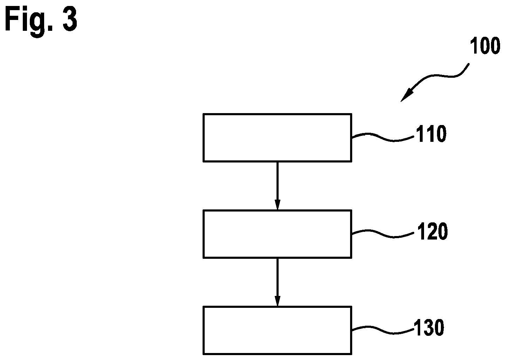

Figur 3 zeigt eine schematische Darstellung eines Ablaufdiagramms, wie es einem Verfahren 100 für den Betrieb einer elektrischen Maschine 2 zugrunde liegt. In einem Schritt 110 werden zunächst die Anschlüsse der elektrischen Maschine 2 mit einer Wechselspannung angesteuert. Diese Ansteuerung der elektrischen Maschine 2 erfolgt dabei zur Einstellung eines vorgegebenen Drehmomentes bzw. einer vorgegebenen Drehzahl wie es im Regelbetrieb durchgeführt wird. Kommt es während dieses Regelbetriebs dabei zu einer Störung, so kann es erforderlich sein, den Regelbetrieb zu beenden und in einen Freilaufbetrieb zu wechseln. Wird ein Ereignis detektiert, das den Wechsel vom Regelbetrieb in den Freilaufbetrieb erforderlich macht, so wird daraufhin der Regelbetrieb beendet und in Schritt 120 wird daraufhin die Amplitude der Wechselspannung, mit der die elektrische Maschine angesteuert wird, auf einen vorbestimmten Wert eingestellt. Bei diesem vorbestimmten Wert handelt es sich dabei vorzugsweise um die Freilaufspannung der elektrischen Maschine bei der aktuellen Drehzahl. Diese drehzahlabhängige Freilaufspannung der elektrischen Maschine kann dabei zuvor in einem weiteren Schritt berechnet werden oder alternativ auch aus einem Speicher ausgelesen werden.

Nachdem an den Anschlüssen der elektrischen Maschine 2 eine Spannung eingestellt worden ist, die dem vorbestimmten Wert, also vorzugsweise der Freilaufspannung, entspricht, erfolgt daraufhin der Wechsel in den Freilauf. Bei diesem Freilauf wird die elektrische Maschine nicht länger aktiv angesteuert. Vielmehr werden in diesem Freilauf die Anschlüsse der elektrischen Maschine 2 voneinander elektrisch getrennt. Die Schaltelemente eines Wechselrichters, der die elektrische Maschine 2 im Regelbetrieb ansteuert, sind dabei in diesem Schaltzustand alle geöffnet.

Zusammenfassend betrifft die vorliegende Erfindung den Wechsel einer elektrischen Maschine vom Regelbetrieb in den Freilauf. Zur Vermeidung von Spannungsüberhöhungen und damit verbundenen Beeinträchtigungen der elektrischen Maschine und der weiteren Komponenten, insbesondere von Batterien, wird zwischen dem Ende des Regelbetriebs und dem Freilauf eine weitere Regelphase eingeführt, während der die Spannung an den Anschlüssen der elektrischen Maschine von der zuvor im Regelbetrieb eingestellten Spannung kontinuierlich auf die zu erwartende Freilaufspannung der elektrischen Maschine angepasst wird.

**Patentansprüche**

1. Vorrichtung zum Betreiben einer elektrischen Maschine (2) für den Wechsel von einem Regelbetrieb zu einem Freilaufbetrieb,
   mit einem Wechselrichter (1),
   wobei der Wechselrichter eine Mehrzahl von Schaltelementen (10a-10f) umfasst,
   wobei der Wechselrichter in einem Regelbetrieb durch Ansteuern der Schaltelemente (10a-10f) eine Wechselspannung an den Anschlüssen der elektrischen Maschine (2) bereitstellt,
   wobei der Wechselrichter in einem Freilaufbetrieb die Anschlüsse der elektrischen Maschine (2) elektrisch voneinander trennt durch Öffnen der Schaltelemente (10a-10f)
   wobei der Wechselrichter dazu ausgelegt ist, in dem Regelbetrieb eine Wechselspannung an den Anschlüssen der elektrischen Maschine (2) bereitzustellen, und in dem Freilaufbetrieb die Anschlüsse der elektrischen Maschine (2) elektrisch voneinander zu trennen,
   **dadurch gekennzeichnet, dass**
   der Wechselrichter (1) dazu ausgelegt ist, bei einem Übergang von dem Regelbetrieb zu dem Freilaufbetrieb die Amplitude der an den Anschlüssen der elektrischen Maschine (2) bereitgestellten Wechselspannung innerhalb einer vorbestimmten Zeitdauer auf einen vorbestimmten Wert einzustellen.

2. Vorrichtung nach Anspruch 1, mit einem Regler (11) der dazu ausgelegt ist, eine Drehzahl der elektrischen Maschine (2) zu bestimmen und eine Spannung zu ermitteln, die der Spannung an den Anschlüssen der elektrischen Maschine (2) in dem Freilaufbetrieb entspricht, wobei der Wechselrichter (11) bei einem Übergang von dem Regelbetrieb zu dem Freilaufbetrieb die Amplitude der Spannung an den Anschlüssen der elektrischen Maschine (2) zunächst auf die ermittelte Spannung einstellt.

3. Vorrichtung nach Anspruch 2, mit einem Drehzahlsensor (20), der dazu ausgelegt ist, die Drehzahl der elektrischen Maschine (2) zu bestimmen.

4. Elektrische Antriebsvorrichtung, mit:

   mit einer elektrischen Maschine (2); und
   einer Vorrichtung nach einem der Ansprüche 1 bis 3.

5. Kraftfahrzeug mit einer elektrischen Antriebsvorrichtung nach Anspruch 4.

6. Verfahren (100) zum Betreiben einer elektrischen Maschine (2) für den Wechsel von einem Regelbetrieb zu einem Freilaufbetrieb, mit den Schritten:

   Ansteuern (110) der Anschlüsse der elektrischen Maschine (2) mit einer Wechselspannung in einem Regelbetrieb;
   Detektieren einer Signalisierung für einen Wechsel von dem Regelbetrieb in einen Freilaufbetrieb;
   Einstellen (120) der Amplitude der Wechselspannung, mit der die elektrische Maschine (2) angesteuert wird, auf einen vorbestimmten Wert innerhalb einer vorbestimmten Zeitdauer; und wobei nachdem an den Anschlüssen der elektrischen Maschine (2) die Amplitude der Wechselspannung eingestellt worden ist, der Wechsel in den Freilauf erfolgt, wobei bei dem Freilauf die Anschlüsse der elektrischen Maschine (2) voneinander elektrisch getrennt (130) werden.

7. Verfahren (100) nach Anspruch 6, wobei der Schritt (120) zum Einstellen der Wechselspannung die elektrische Maschine (2) mit einer Wechselspannung ansteuert, die einer Klemmenspannung der elektrischen Maschine bei Freilauf entspricht.

**Claims**

1. Device for operating an electric machine (2) for the transition from a regulated operating mode to a freewheeling mode,
   including an inverter (1),
   wherein the inverter comprises a plurality of switching elements (10a-10f),
   wherein the inverter provides an AC voltage at the terminals of the electric machine (2) by actuating the switching elements (10a-10f) in a regulated operating mode,
   wherein the inverter electrically disconnects the terminals of the electric machine (2) from each other by opening the switching elements (10a-10f) in a freewheeling mode,
   wherein the inverter is designed to provide an AC voltage at the terminals of the electric machine (2) in the regulated operating mode, and to electrically disconnect the terminals of the electric machine (2) from each other in the freewheeling mode,
   **characterized in that**
   the inverter (1) is designed to set the amplitude of the AC voltage provided at the terminals of the electric machine (2) to a predetermined value within a predetermined period of time during a transition from the regulated operating mode to the freewheeling mode.

2. Device according to Claim 1, including a controller (11), which is designed to determine a rotational speed of the electric machine (2) and to ascertain a voltage that corresponds to the voltage at the terminals of the electric machine (2) in the freewheeling mode, wherein the inverter (11) initially sets the amplitude of the voltage at the terminals of the electric machine (2) to the ascertained voltage during a transition from the regulated operating mode to the freewheeling mode.

3. Device according to Claim 2, including a rotational speed sensor (20), which is designed to determine the rotational speed of the electric machine (2).

4. Electric drive device, including:

   an electric machine (2); and
   a device according to one of Claims 1 to 3.

5. Motor vehicle including an electric drive device according to Claim 4.

6. Method (100) for operating an electric machine (2) for the transition from a regulated operating mode to a freewheeling mode, including the steps of:

   driving (110) the terminals of the electric machine (2) with an AC voltage in a regulated operating mode;
   detecting a signalling for a transition from the regulated operating mode to a freewheeling mode;
   setting (120) the amplitude of the AC voltage with which the electric machine (2) is driven to a predetermined value within a predetermined period of time; and
   wherein the transition to the freewheeling state takes place after the amplitude of the AC voltage at the terminals of the electric machine (2) has been set, wherein the terminals of the electric machine (2) are electrically disconnected (130) from each another in the freewheeling state.

7. Method (100) according to Claim 6, wherein the step (120) for setting the AC voltage drives the electric machine (2) with an AC voltage that corresponds to a terminal voltage of the electric machine in the freewheeling state.

**Revendications**

1. Dispositif destiné à faire fonctionner une machine électrique (2) pour passer du fonctionnement normal à un fonctionnement en roue libre,
   ledit dispositif comprenant un onduleur (1),
   l'onduleur comprenant une pluralité d'éléments de commutation (10a-10f),
   l'onduleur produisant une tension alternative aux bornes de la machine électrique (2) en fonctionnement normal par commande des éléments de commutation (10a-10f),
   l'onduleur séparant électriquement les bornes de la machine électrique (2) les unes des autres en fonctionnement en roue libre par ouverture des éléments de commutation (10a-10f),
   l'onduleur étant conçu pour produire une tension alternative aux bornes de la machine électrique (2) en fonctionnement normal, et pour isoler électriquement les bornes de la machine électrique (2) les unes des autres en fonctionnement en roue libre,
   **caractérisé en ce que**

l'onduleur (1) est conçu pour régler l'amplitude de la tension alternative, produite aux bornes de la machine électrique (2), à une valeur prédéterminée dans un intervalle de temps prédéterminé pendant une transition du fonctionnement normal au fonctionnement en roue libre.

2. Dispositif selon la revendication 1, comprenant un régulateur (11) qui est conçu pour déterminer une vitesse de rotation de la machine électrique (2) et pour déterminer une tension qui correspond à la tension aux bornes de la machine électrique (2) dans le fonctionnement en roue libre, l'onduleur (11) réglant initialement l'amplitude de la tension aux bornes de la machine électrique (2) à la tension déterminée lors d'une transition du fonctionnement normal au fonctionnement en roue libre.

3. Dispositif selon la revendication 2, comprenant un capteur de vitesse de rotation (20) qui est conçu pour déterminer la vitesse de la machine électrique (2).

4. Dispositif d'entraînement électrique comprenant :

   une machine électrique (2) ; et
   un dispositif selon l'une des revendications 1 à 3.

5. Véhicule automobile comprenant un dispositif d'entraînement électrique selon la revendication 4.

6. Procédé (100) de fonctionnement d'une machine électrique (2) pour passer d'un fonctionnement normal à un fonctionnement en roue libre, le procédé comprenant les étapes suivantes :

   appliquer (110) aux bornes de la machine électrique (2) une tension alternative dans un fonctionnement normal ;
   détecter une signalisation pour passer du fonctionnement normal au fonctionnement en roue libre ;
   régler (120) l'amplitude de la tension alternative avec laquelle la machine électrique (2) est commandée, à une valeur prédéterminée dans un intervalle de temps prédéterminé ; et
   le passage en roue libre étant après le réglage de l'amplitude de la tension alternative aux bornes de la machine électrique (2), les bornes de la machine électrique (2) étant isolées électriquement (130) les unes des autres pendant la roue libre.

7. Procédé (100) selon la revendication 6, l'étape (120) de réglage de la tension alternative commandant la machine électrique (2) avec une tension alternative qui correspond à une tension aux bornes de la machine électrique en roue libre.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012101508 A1
- DE 102012002023 A1

- US 7279862 B1